(19) Europäisches Patentamt
European Patent Office
Office européen des brevets

(11) **EP 3 505 759 A1**

(12) **EUROPEAN PATENT APPLICATION**

(43) Date of publication:
**03.07.2019 Bulletin 2019/27**

(51) Int Cl.:
**F04B 43/06** *(2006.01)* **F04B 19/00** *(2006.01)*
**F04B 17/00** *(2006.01)* F16K 99/00 *(2006.01)*

(21) Application number: **18156738.9**

(22) Date of filing: **14.02.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **28.12.2017 EP 17210837 P**

(71) Applicant: **IMEC vzw**
**3001 Leuven (BE)**

(72) Inventors:
- **VAN ROY, Willem**
 **3001 Leuven (BE)**
- **GENOE, Jan**
 **3001 Leuven (BE)**

(74) Representative: **DenK iP**
**Leuvensesteenweg 203**
**3190 Boortmeerbeek (BE)**

(54) **ELECTROSTATIC PUMP**

(57) A microfluidic pumping system for providing continuous or pulsed pumping action of a sample fluid along a microfluidic channel (301, 401) of a microfluidic device is described. The pumping system comprises at least one actuator (405) comprising an actuator channel (305) and polarizing means (306) for generating pumping fluid motion, and at least one microfluidic rectification system (304, 310, 402, 403) for facilitating the flow of a sample fluid in a predetermined direction, the at least one microfluidic rectification system (304, 310, 402, 403) being laid out in or along the microfluidic channel, and the at least one actuator (405) being adapted for creating a pressure in the microfluidic channel, the system thus being adapted for providing continuous or pulsed fluid movement of the sample fluid along the microfluidic channel when actuation of the pumping fluid in the actuator channel takes place and further providing sample fluid immobilization when no actuation takes place.

**FIG. 1**

**Description**

**Field of the invention**

The invention relates to the field of microfluidic devices. More specifically it relates to a device allowing microfluidic pumping using wetting control.

**Background of the invention**

Medical devices for analysis usually deal with very small amounts of fluid, and transportation of these small amounts of fluid is often required for inducing reactions and for analysis. Pumps are used for this transportation. Nevertheless, traditional pumps are typically large and bulky in comparison with a microfluidic channel, and they have moving parts which makes integration, such as integration on a chip, difficult or non viable. For this reason, pumps usually are not integrated.

Pumping systems thus need to be scaled down and be compact for pumping fluids in microchannels. Micro pumps have typically dimensions ranging within millimeters, and have the ability to pump fluids at volume flow rates ranging from fractions of a milliliter up to a several milliliters per minute. The wide availability of relatively cheap micro-machining techniques enables such devices to be viable, both technically and commercially. Portable dialysis machines and intravenous drug delivery (for instance, insulin) are examples of medical devices which comprise these micro pumps. In the developing field of micro-fluidics, so-called lab-on-a-chip devices exploit the laminar flow characteristics of small cross-section liquid channels to perform transport in a variety of chemical reactions and controlled mixing and liquid analysis, using very small volumes of liquids. These devices are finding increasing numbers of applications in biomedical research. Such devices would benefit from the availability of a suitable and compatible micro pump either as a stand-alone or integrated component.

Micro pumps are often based on reciprocating diaphragms and make use of valves based for example on flexible flaps or diaphragms. Micro-pumps are generally only capable to induce very limited flow rates. Such flow rates are too low to be useful for some particular applications, for example in point-of-care medical devices in which speed and parallelization of analysis is important. Examples of existing micropumps are described in Abhari et al., Int. J. Electrochem. Sci. 7 (2012) 9765-9780, Chen et al., J. Micromech. Microeng. 18 (2008) 013001 (22pp), and Iverson et al. Microfluid Nanofluid 5 (2008) 145-174.

Another requirement for micro-pumps is high energy efficiency. This is important for mobile applications, particularly those in which power is supplied by batteries. It is desirable to minimize the power consumption and to maximize the time that the device can run on the battery.

Jamming of moving parts is another potential source of problems. Some applications use fluids that can cause moving parts to become jammed if the system is used for longer time. Examples would be the pumping of blood, insulin, etc. due to clotting and sedimentation. Micropumps featuring actuators with sliding surfaces, for instance between cylinders and pistons, and valves featuring contacting surfaces, such as flap or reed valves can suffer from reliability problems due to sticking and thus blocking of these sub-systems. Moreover, mechanical features typically do not scale down well.

For example, flaps in microfluidic devices are unreliable, because Van der Waals forces have an important influence at microscopic level. In addition, sliding and moving surfaces can damage the fluid being pumped in the case of biological fluids. Rupturing of cell membranes due to moving parts, due to excessively high shear rates or due to pulsed pressure is an undesirable effect associated with displacement pumps and mechanical pumps. It would therefore be desirable to provide a compact pump, suitable for point-of-care medical devices. Advantageously such pumps also show a low power usage, are able to produce a flow of fluid that is responsive to the demands of the system in terms of flow rate and also do not introduce the cyclical pressure pulses that are usually associated with positive displacement pumps.

**Summary of the invention**

It is an object of embodiments of the present invention to provide a reliable and compact microfluidic pumping system. It is an advantage of embodiments of the present invention that pumps are provided with reduced or no back-flow. It is an advantage of embodiments of the present invention that pumps are provided having no need for mechanical moving parts.

The present invention relates to a microfluidic pumping system for providing continuous or pulsed pumping action of a sample fluid along a microfluidic channel of a microfluidic device, the pumping system comprising:

- at least one actuator comprising an actuator channel and polarizing means, the polarizing means and surfaces of the actuator channel being adapted for generating pumping fluid motion by alternate variation of the wetting properties in the actuator channel, and

- at least one microfluidic rectification system for facilitating the flow of a sample fluid in a predetermined direction and reducing the flow in another direction,

the at least one microfluidic rectification system being laid out in or along the microfluidic channel, and the at least one actuator being adapted for creating a pressure in the microfluidic channel, the system thus being adapted for providing continuous or pulsed fluid movement of the sample fluid in a predetermined direction along the microfluidic channel when actuation of the pumping fluid in the actuator channel takes place and further not providing substantial sample fluid movement when no actuation takes place. The at least one actuator may be adapted for providing sample fluid immobilization when no actuation takes place. The actuator may be adapted for providing continuous or pulsed unidirectional fluid movement of the sample fluid. It is an advantage of embodiments of the present invention that fluid can be provided in a predetermined direction while the pumping action is performed, and fluid movement or diffusion, such as back-diffusion, is reduced or even completely avoided when no pumping action is performed. Where in embodiments of the present invention, reference is made to a rectification system, reference is made to any system allowing flow in one or some directions and reducing the flow in at least one other direction. The rectification system may be embodied in different ways, such as for example based on diode like devices or devices directing fluids in one direction using the wettability properties of the walls.

The at least one actuator may branch out of the microfluidic channel, the branched-out actuator comprising polarizing means adapted to change, e.g. increase, wettability when active, the actuator further comprising surfaces adapted to decrease wettability when polarizing mean are inactive, thus adapted for providing a movement of fluid for creating a varying pressure in the microfluidic channel. It is an advantage of embodiments of the present invention that the pumped fluid itself creates pressure on the microfluidic channel, reducing the amount of fluid in contact with the pumping fluid and/or the amount of fluid that needs to enter in the actuator.

The at least one actuator may be a loop shaped actuator, part of the actuator channel having a common region with the microfluidic channel, the at least one actuator being adapted for pumping the pumping liquid around the loop such that during said pumping, sample fluid is flowing in between the pumping liquid flow. The polarizing means may be localized in the loop or may be localized in the common region. The sample fluid flowing in between the pumping liquid, may be flowing in the loop or in the common region.

The rectification system may comprise a shaped junction of the microfluidic channel and the actuator channel providing reducing the flow of a pumping fluid in the microfluidic channel and of the sample fluid in the actuator channel, and wherein the actuator comprises electrodes for generating fluid motion. It is an advantage of embodiments of the present invention that continuous or pulsed pumping is obtained with a compact design without mechanical pieces, providing separation between pumped fluid and pumping fluid via design of the outlet taking into account contact angles of the fluids, preventing back flow and contamination.

The shaped junction may provide hydrophilic surface properties in the microfluidic channel that is intended to receive the sample fluid, and hydrophobic surface properties in the actuator loop to direct both fluids into their designated channel. The pumping fluid and sample fluid may have different properties. The polarizing means may be adapted for generating fluid motion by polarization across the interface between the pumping fluid and the sample fluid. It is an advantage of embodiments of the present invention that fluid can be provided in a predetermined direction while the pumping action is performed, and fluid movement or diffusion, such as back-diffusion, is reduced or even completely avoided when no pumping action is performed.

The actuator may be adapted to provide a back- and forth-movement of a predetermined volume, the actuator further being connected to the microchannel by a channel characterized by a volume being equal to or longer than the predetermined volume of the back- and forth-movement induced by the actuator. It is an advantage of embodiments of the present invention that the pumping fluid, such as oil or air, is distant from the microfluidic channel, reducing the chances of contamination of the pumped fluid.

At least one microfluidic rectification system may comprise at least one fluidic diode. It is an advantage of embodiments of the present invention that the pumping system is easy to produce, by etching for example, and it does not require moving parts, and ensures unidirectional flow.

At least one microfluidic rectification system may comprise at least one fluidic valve, e.g. at least one fluidic one-way valve. It is an advantage of embodiments of the present invention that, by not powering the fluidic valve, no backflow of the pumped fluid takes place, and further, if combined with a branched actuator, high control of the fluid direction is obtained.

The polarizing means may comprise two electrode layers in different walls of the actuator channel, e.g. opposite walls of the actuator channel. It is an advantage of embodiments of the present invention that electrodes can be provided by known methods of deposition in integrated microfluidic systems.

The surface of the actuator may comprise at least one dielectric layer. It is an advantage of embodiments of the present invention that control via EWOD (electrowetting-on-dielectric) can be provided, and more flexibility of fluid is obtained, because fluid does not need to be electrically conductive.

The present invention also relates to a microfluidic system comprising at least one fluidic channel and one or more fluidic pumping systems as described above. It is an advantage of embodiments of the present invention that a resilient system without mechanical pumps can still provide fluidic pumping without the need of external pumps, increasing integrability and portability.

The microfluidic system may comprise a number N parallel pumping systems actuating with a 360°/N phase shift, for providing continuous or pulsed flow in a predetermined direction of a microfluidic system. It is an advantage of embodiments of the present invention that a unidirectional, very smooth continuous flow can be obtained. The microfluidic system may comprise two parallel pumping systems actuating with a 180° phase shift, for providing continuous flow in a predetermined direction of a microfluidic system.

The microfluidic system further may combine any or all of open-ended shaped or loop-shaped microfluidic channels for providing fluid rectification and/or pumping, branched-out actuators for providing pressure in the microfluidic channels, microfluidic diodes or one-way valves for fluid rectification, and portions of the microfluidic channel with a length and/or section adapted for increasing locally the fluid pressure and/or the volumetric flow rate. It is an advantage of embodiments of the present invention that highly integrated, complex microfluidic systems can be obtained without the need of bulky external or internal pumps, mechanical valves or pieces.The present invention also relates to a diagnostic device comprising at least one fluidic channel and one or more fluidic pumping systems according to any of the previous claims for pumping a sample fluid through the fluidic channel to an analyzing means for analyzing the sample.

Particular and preferred aspects of the invention are set out in the accompanying independent and dependent claims. Features from the dependent claims may be combined with features of the independent claims and with features of other dependent claims as appropriate and not merely as explicitly set out in the claims. These and other aspects of the invention will be apparent from and elucidated with reference to the embodiment(s) described hereinafter.

## Brief description of the drawings

FIG. 1 illustrates an embodiment of the present invention comprising a ring and oil for pumping fluid.

FIG. 2 illustrates different outlet configurations as can be used in an embodiment as shown in FIG. 1.

FIG. 3a to FIG. 3d illustrates different phases of a 4 phase clocking scheme implementation of a pump, according to an embodiment of the present invention.

FIG. 4 illustrates another embodiment according to the present invention.

FIG. 5 illustrates the working principle of a diode, as can be used in embodiments of the present invention.

FIG. 6 illustrates an embodiment of the present invention comprising an actuator connected to the channel, for pumping fluid.

FIG. 7 illustrates exemplary configurations of microfluidic circuits according to embodiments of the present invention, using fluidic diodes.

FIG. 8 illustrates exemplary configuration of microfluidic circuits according to embodiments of the present invention, using microfluidic valves.

FIG. 9 illustrates further configurations of microfluidic circuits comprising combinations of configurations and microfluidic resistances.

FIG. 10 illustrates a diagnostic device according to embodiments of the present invention.

The drawings are only schematic and are non-limiting. In the drawings, the size of some of the elements may be exaggerated and not drawn on scale for illustrative purposes. Any reference signs in the claims shall not be construed as limiting the scope.

In the different drawings, the same reference signs refer to the same or analogous elements.

## Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "integrated", reference is made to any type of integration in a substrate, such as for example monolithically integrated, heterogeneously integrated or even hybridly integrated.

Where in embodiments of the present invention reference is made to the pumped fluid, reference is made to the fluid that one wishes to propagate in the microfluidic device. Where in embodiments of the present invention reference is made to the pumping fluid, reference is made to the fluid that is used to generate the pumping action. This fluid is thus not of interest for analyzing or further use in the microfluidic system, but is introduced for inducing pumping action.Where in embodiments of the present invention reference is made to "fluid rectifier", reference is made to a feature or device adapted to facilitate the flow of a fluid in one predetermined direction in a microfluidic device, while reducing or impeding the flow in other directions, thus obtaining a unidirectional current of fluid. For example, fixed geometries such as nozzles, diffusers, and the like provided along a microchannel qualify as rectifiers, because they facilitate flow in one direction and reduce or impede flow in the opposite.

Where in embodiments of the present invention reference is made to "wetting", reference is made to the tendency of a fluid to cover a surface.

Where in embodiments of the present invention reference is made to interface energy or surface energy, reference is made to energy (per unit area) of an interface.

Where in embodiments of the present invention reference is made to a contact angle, the contact angle is defined as follows : In general a system will want to rearrange itself such that the total of all energies is as small as possible. In a three-phase system where only the interface energies play a role (= other energies such as the gravitional energy can be neglected), then at equilibrium the interface line between the two fluid phases will position itself at a certain angle with respect to the solid surface. This angle, measured through the liquid of interest, is called the contact angle $(\theta)$. In a solid - liquid - vapor system it depends on the interface energies as follows:

$$\gamma_{sl} + \gamma_{lv} \cos \theta - \gamma_{sv} = 0 \text{ or } \cos \theta = (\gamma_{sv} - \gamma_{sl})/\gamma_{lv}$$

where $\gamma$ is the interface energy, and the subscripts l, s, v refer to solid, liquid, vapor. More generally, in a solid - fluid 1 - fluid 2 system, the contact angle $\theta_1$ with respect to fluid 1 is given by

$$\gamma_{sf_1} + \gamma_{f_1 f_2} \cos \theta_1 - \gamma_{sf_2} = 0 \text{ or } \cos \theta_1 = (\gamma_{sf_2} - \gamma_{sf_1})/\gamma_{f_1 f_2}$$

and one could similarly define a contact angle $\theta_2$ with respect to fluid 2. The sum of these is then $\theta_1 + \theta_2 = 180°$.

Where in embodiments of the present invention reference is made to capillary force, reference is made to the tendency of the interface between the three phases to move and minize the total energy. The energy gained when the interface moves over a distance is equal to the product of the capillary force and said distance.

Where in embodiments of the present invention reference is made to a hydrophilic surface, reference is made to a surface where the watery fluid tends to spread out. This corresponds to a contact angle $\theta_{\text{watery fluid}} < 90°$.

Where in embodiments of the present invention reference is made to a hydrophobic surface, reference is made to a surface where the watery fluid tends to contract. This corresponds to a contact angle $\theta_{\text{watery fluid}} > 90°$.

Where in embodiments of the present invention reference is made to electrowetting, reference is made to the following effect : In embodiments of the present invention typically one of the fluids interacts strongly with electric fields e.g. because of dissolved ions (these can even be background ions, such as $CO_2$ dissolved in water forming carbonic acid $H_2CO_3$ and forming $H^+$, $HCO_3^-$, and $CO_3^{2-}$ ions, or even just the water itself forming a small amount of $H^+$ and $OH^-$ ions) or e.g. because of a high dielectric constant. In embodiments of the present invention this typically will be the watery phase and will be the fluid of interest, i.e. the sample fluid. When reference is made to contact angles, wetting, hydrophilic/ hydrophobic, electrowetting etc., this is referred to the sample fluid. Further, one of the fluids interacts weakly with electric fields, which in the present invention typically may be a vapor or oily phase. By applying electric fields we add an extra energy term to the energy balance described above, and we can induce the liquid to move. E.g. without electric fields, fluid 2 (oil or gas) wants to cover a certain surface or occupy a certain region. By applying an electric potential (creating an electric field), we can induce the watery fluid to cover this surface or occupy this region, and thus provide pumping action. By removing the electric field, we can induce the fluid 2 (oil or gas) to cover this surface or occupy this region, and thus provide pumping action in the opposite direction. The present invention relates to a microfluidic pump for providing pumping action in a microchannel, for example for directing a fluid from one cavity, inlet or duct to another cavity, outlet or duct, with no need of external pumping, no need of mechanical parts and with no flow (e.g. no backwards movement, no back-diffusion) when the pump is not active. The pumping is based on wetting principles, e.g. electrowetting principles as described above. In embodiments of the present invention, continuous or pulsed pumping action is provided as long as the pump is kept active. Embodiments of the present invention also relate to a microfluidic system capable of providing continuous or pulsed pumping action along a microfluidic channel.

In a first aspect, the present invention thus relates to a microfluidic pumping system for providing continuous or pulsed pumping action of a sample fluid along a microfluidic channel of a microfluidic device. The pumping system comprises at least one actuator comprising an actuator channel and a polarizing means. The polarizing means and the surfaces of the actuator channel are adapted for generating pumping fluid motion by alternate variation of the wetting properties in the actuator channel. The pumping system also comprises at least one microfluidic rectification system for facilitating the flow of a sample fluid in a predetermined direction and reducing the flow in another direction. The at least one microfluidic rectification system is being laid out in or along the microfluidic channel, and the at least one actuator is adapted for creating a pressure in the microfluidic channel, the system thus being adapted for providing continuous or pulsed fluid movement of the sample fluid in a predetermined direction along the microfluidic channel when actuation of the pumping fluid in the actuator channel takes place and further not providing substantial sample fluid movement when no actuation takes place. The at least one actuator may be adapted for providing sample fluid immobilization when no actuation takes place. The actuator may be adapted for providing continuous or pulsed unidirectional fluid movement of the sample fluid.

In embodiments of the present invention, movement of a fluid in a microfluidic channel is thus obtained by changing the wetting characteristics of the surface of an actuator for liquids. The liquid interface position is altered by changing the wetting properties of the surfaces, e.g. by applying an electric field or an electric potential. By appropriately controlling the hydrophilic or hydrophobic characteristics, the fluid can be moved through the microfluidic channel. To prevent fluid to flow in an unwanted direction, fluid rectifiers can be used which allow the flow only in one direction of the channel.

In the following, two exemplary embodiments of the present invention are shown. Different pumping methods are described, one making use of back-and-forth fluid motion in combination with fluid rectifiers, one by using an actuator that circulates a pumping fluid and that pulls the sample fluid further during the circulation of the pumping fluid.

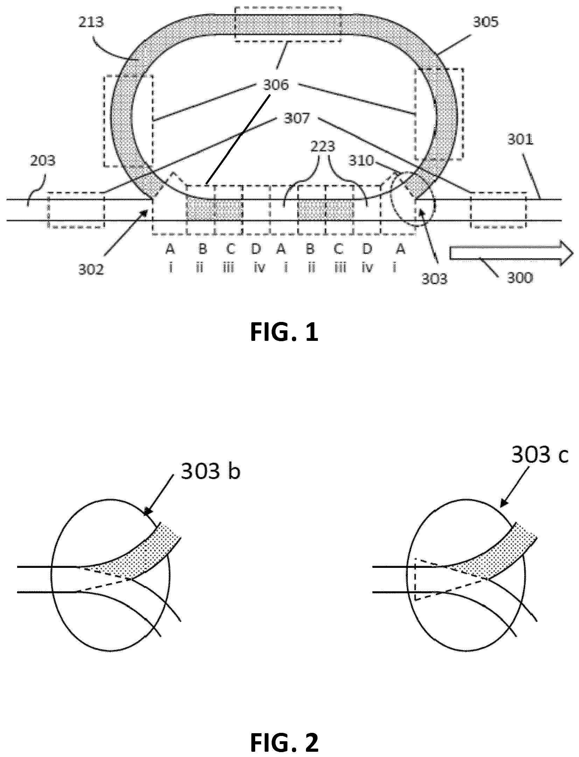

In the embodiment of FIG. 1, electrowetting is used to create a continuous or pulsed pumping action with fluidic rectification, thereby forcing the fluid to be pumped in one predetermined direction. The pumping effect of the fluid is obtained by forcing the fluid to be pumped along a channel, using the circulation of a second pumping fluid in a loop shaped cavity.

FIG. 1 shows the top view of an example of a microfluidic pump for pumping fluid in a predetermined direction 300 through a channel 301. The pump comprises an inlet 302 and outlet 303, which includes rectification means 310, so that evacuation of a pumped fluid from the actuator to the channel 301 is facilitated, thereby providing rectification. Further, this rectification means may be advantageously adapted to facilitate entry of pumped fluid 203 to the further microfluidic channel 301, but to prevent leakage of pumping fluid 213 from the loop-shaped actuator into the further microfluidic channel. For example, if the pumped fluid 203 is a watery phase and the pumping fluid 213 is oil-based, the surfaces of the channel 301 can be made hydrophilic and surfaces of the actuator channel (e.g. the ring 305) can be made hydrophobic such that pumped fluid arriving at the outlet 303 will preferentially continue into the channel 301, whereas pumping fluid arriving at the outlet will preferentially continue into the ring 305, thus separating pumped fluid 203 from pumping fluid 213 via design of the outlet taking into account interfacial energy and related parameters (e.g. contact angles) of the fluids. In this way contamination is prevented and a continuous or pulsed pumping can be obtained without mechanical pieces. The surfaces of channels 301 and 305 can be made hydrophilic and hydrophobic by e.g. fabricating them in a suitable material. Exemplary values of angles and energies can be found in "Wetting Behavior of Water and Oil Droplets in Three-Phase Interfaces for Hydrophobicity/philicity and Oleophobicity/philicity", by Yong Chae Jung and Bharat Bhushan, Langmuir 2009, 25(24), 14165-14173. The surfaces can also be made hydrophilic and hydrophobic by electrowetting, using electrodes 306, 307 placed on or in the channel 301 and/or the ring 305. The polarizing means thus may be implemented through electrodes 306, 307.

The pumping fluid 213 must be chosen in accordance with the application of the device so it is immiscible with the pumped fluid 203. The pumping fluid 213 must in addition also have different electrowetting properties than the pumped fluid 203. The ring 305 is almost completely filled with the pumping fluid 213. If the fluid to be pumped is water-based, the pumping fluid in the ring may be oil. By th movement of the pumping fluid 213, a gradient of pressure is generated, the pumped liquid 203 advances and eventually leaves through the outlet 303, thus providing actuation using the loop and a unidirectional stream of pumped liquid 203 through the channel.

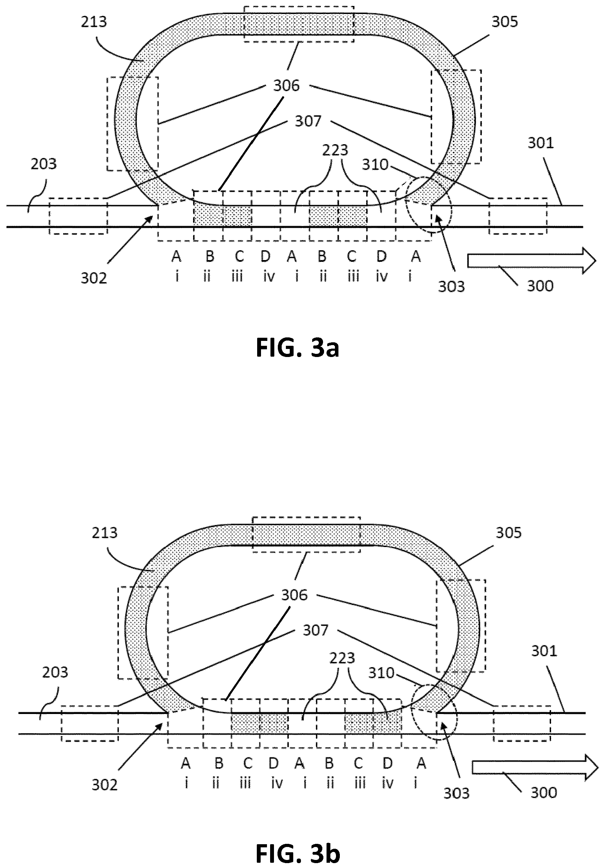

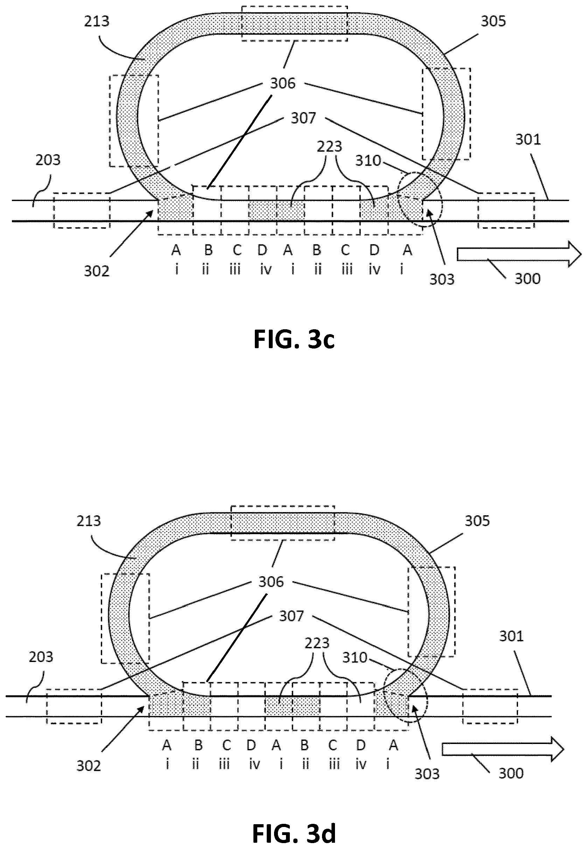

By way of illustration, FIG. 3a to FIG. 3d illustrate different phases of an implementation of a pump using a 4 phase clocking scheme. It is to be noted that although an implementation with 4 wetting phases has been described, similar schematics employing for example more than 4 phase are possible, provided that the pump liquid volume remains constant. In the implementation shown in FIG. 3a to FIG. 3d it can be seen that the pumping liquid as well as the pumped liquid wets subsequently on different electrodes. The wetting of different electrodes is described in the table below. By applying the phase clocking scheme, the pumped liquid can be propagated through the channel 301.

| Drawing | Electrodes to which the pumping liquid is wetted | Electrodes to which the pumped liquid is wetted |
| --- | --- | --- |
| FIG. 3a | B,C | D,A |
| FIG. 3b | C,D | A,B |
| FIG. 3c | D,A | B,C |
| FIG. 3d | A,B | C,D |

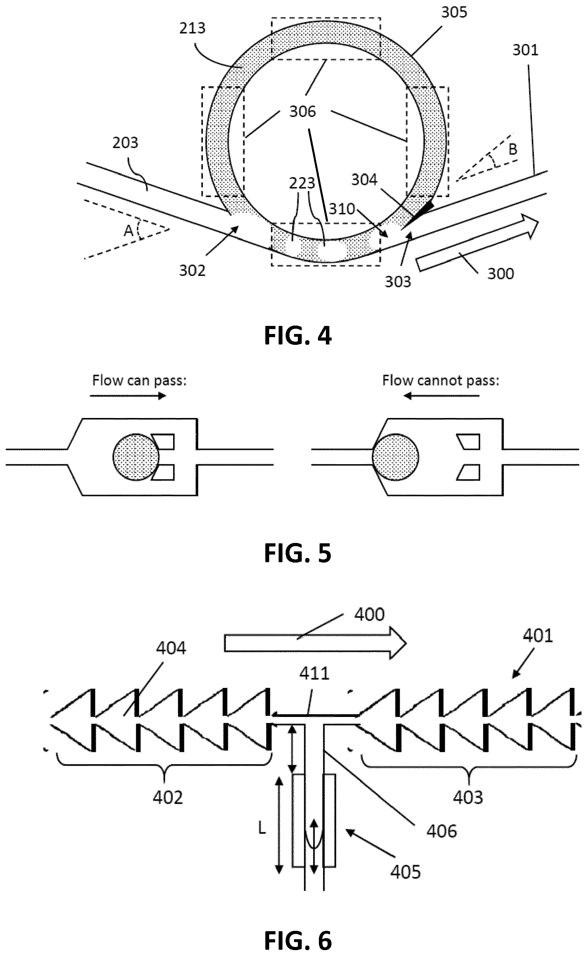

The width of the channel 301 used may depend on the fluid to be analysed. A narrow channel provides the advantage of a better control (lower electric fields, ...) and enables more actuate measurements of molecular properties. However, capillary forces of the liquid in those narrow channel can be too high. The average radius of the loop may advantageously be selected such that it is larger than 40 times the width of the channel. The microfluidic channel connected to the inlet and the one connected to the outlet may be tangential to the loop, and may even be colinear. By way of illustration, embodiments of the present invention not being limited thereto, a number of different outlet configurations 303b and 303c are shown in FIG. 2. In other embodiments such as the one shown in FIG. 4, they may form a predetermined angle A, which may depend of microfluidic design and compact.

Other rectification and actuation means may be provided. For example, fluidic diodes are fluidic devices or channel features that allow flow preferentially in one direction. These features cause that flow resistance for forward motion to be small, while providing large flow resistance for backward motion. In some embodiments of the present invention, a fluidic diode may comprise a set of cavities along the channel, with geometric shapes which give the effect of unidirectionality of a diode. A single geometric formation may be enough, but in the case of diodes, it is preferred a set comprising a plurality of these geometric formations or shapes, because efficiency increases, so less amount of liquid flows back. The present examples are not limiting, and the present invention can work with any other fluidic diode as well. By way of illustration, the principles of operation of an exemplary bead-based diode are shown in FIG. 5. The diode is based on a chamber in the flow channel, a bead and some posts that prevent the bead from moving to one of the inlet or outlet. When there is a flow towards the left hand side, the bead is pushed against the left exit and blocks the flow. When there is a flow towards the right hand side, the bead is stopped by the posts, so flow can continue around the bead. It is to be noted that FIG. 5 only shows one out of a large range of diodes, with different compromises between the performance and cost/fabrication complexity. Possible diodes are static geometry, passive vales, leaky bead-based diodes, non-leaky bead-based diodes, micro-check valves, etc.

In the embodiment of FIG. 6, wetting actuation is used in a side branch of the microfluidic channel wherein propagation of a sample fluid is required. The sample fluid is pulled and pushed in and out this side branch using back- and forth-movement, thus resulting in an overall movement of the sample fluid. The sample fluid movement is ensured to be unidirectional by addition of rectifying features.

FIG. 6 shows an exemplary embodiment of a pump comprising two fluidic diodes between a linear actuator (e.g. a linear cavity) branching out of the microfluidic channel, in which the direction of lower flow resistance follows the block arrow 400 through a microchannel 401. Fluid in the first diode 402 is sucked by the action of the actuator into the portion 411 of the microchannel 401 between the diodes, and/or into the actuator 405, when the actuator exerts on the microchannel 401 a negative pressure. The sucking action may be provided in the actuator by fluid electrowetting control, e.g. by applying an electric field to the electrodes in the actuator and producing a movement of fluid due to the tendency of reduction of energy. Then, the actuator stops the action, for example by discharge of electrodes, and the fluid recovers its former state (for example, it recovers its initial position or contact angle, due to hydrophobicity of the surfaces). Because the liquid tends to recover its previous state, fluid returns to the channel. Thus, the actuator exerts a positive pressure, and the fluid present in the channel is pushed in the direction of lower resistance, e.g. inside the second diode 403, because flux back into the first diode 402 is made difficult or even impeded by the geometry of the cavities 404. When the actuator exerts again negative pressure, the fluid movement from the second diode 403 back to the actuator is more difficult than flux from the first diode 402 into the actuator, thus liquid is sucked from the first diode 402, and the overall flux follows the direction of the block arrow 400.

The length L of the reservoir of the actuator 405, and/or of the connection 406 between the actuator 405 and the microchannel, can be made long enough to act as a buffer, preventing leaks of the pumping fluid 213 into the channel. For example, if oil is used, contamination of the fluid due to oil entering the microchannel can be avoided by providing long connections or actuators. Presence of bubbles in the microchannels, which may clog the channels, can be avoided also if the second fluid 213 is gaseous (e.g. air) by use of a sufficiently long actuator 405 and/or actuator connection 406.

Powering the electrodes on the ring 305 of the pump of FIG. 1 provides actuation, and due to the low dielectric constant of the pumped fluid with respect to the higher dielectric constant of the pumping fluid, pumped fluid is attracted between the electrodes, entering the ring through the inlet and pushing further droplets 223 of pumped fluid 203, formed within the pumping fluid, across the ring cavity. The feature 304 allows an easy exit of the pumped fluid to the channel, reducing back diffusion into the pump, which provides fluid rectification. Thus, the pump of FIG. 1 has equivalent pumping function as the separate actuator 405 and diodes 402, 403 of FIG. 6.

The exemplary embodiment of FIG. 6 shows nozzle-diffuser type diodes. Each diode 402, 403 comprises a series of triangular cavities 404 in the microchannel. In other embodiments of the present invention, each diode may comprise a single cavity. The orifices are positioned on the base of the triangle and on its opposite vertex. Liquid entering the triangular cavity through the vertex slowly expands into the cavity (diffuser action), while liquid entering from the base to the vertex is sprayed into the cavity and then guided again to the vertex exit (nozzle action). At high Reynolds numbers (turbulent flow), flow is easiest in the nozzle direction, while at low Reynolds numbers (laminar flow), flow is easiest in the diffuser direction, such that in both cases rectification takes place (although in opposite direction, so the design has to be adapted to the intended flow regime). Although this diode can work in the laminar flow regime, its performance degrades for very low Reynolds numbers, and Singhal et al., Sensors and Actuators A 113, 226-235 (2004) have shown that there may be no rectification for Reynolds number Re < 200.

Other types of diodes may be used as well. Another type of static-geometry, passive diode is the Tesla valve. Gamboa et al., Journal of Fluids Engineering 127, 339-346 (2005) have shown that this diode can operate in the laminar flow regime, with a similar lack of rectification at Re < 200. Many other types of diodes can be used. Examples of diodes that do work at very low Reynolds numbers are micro-check valves and bead-based diodes.

Combinations of features may be provided. For example, a couple of triangular cavities 404 as in FIG. 6 may be included at the inlet 302 and outlet 303 of the ring 305 of FIG. 1, providing rectification along the channel 301.

In embodiments of the present invention, external pressure is not essential for the operation of the pump. If needed, it can be applied only to provide a first filling of the microchannel, and in particular of the actuator, but during the rest of operation pressure is provided by the actuators. Electrical contacts (or any other means to vary wetting and/or provide an alternate fluid movement) are needed only in the actuators. Thus, contacts are not needed in the places where the fluid is required and liquid can be sent to parts of the system distanced from the actuators. The fact that the actuation is produced in a branch channel means that the interface between the fluids (e.g. the interface between water-based pumped fluid and oil or air), necessary for creating unbalance in the energy and produce forces, may be distant from the microchannel. This means that the fluid may be continuously pumped or pumped in a pulsed manner in the present invention, in contrast to pumping of droplets along a channel. Pumping of droplets may be locally present, as shown by the droplets 223 inside of loop-shaped pumps like in FIG. 1, but not necessarily along the microfluidic channel. Embodiments of the present invention have higher yield than devices which operate via single-droplet movement along a channel.

In a second aspect of the present invention, a fluidic system comprising a pumping system according to embodiments of the first aspect is described. Some embodiments of the present invention are conceptually similar to an electric rectifier circuit in which electric potential can be identified with fluid pressure, and charge flow or electric current can be identified with liquid flow, or an electric charge pump circuit. By extension and analogy, all translations of electrical rectifiers and charge pumps into a fluidic analogy are included as well. For example, an external actuator can be seen as an alternate voltage source, a microfluidic diode as an electrical diode, or a ring pump as a transistor. Some embodiments are discussed in the following paragraphs, the present invention not being limited to these examples.

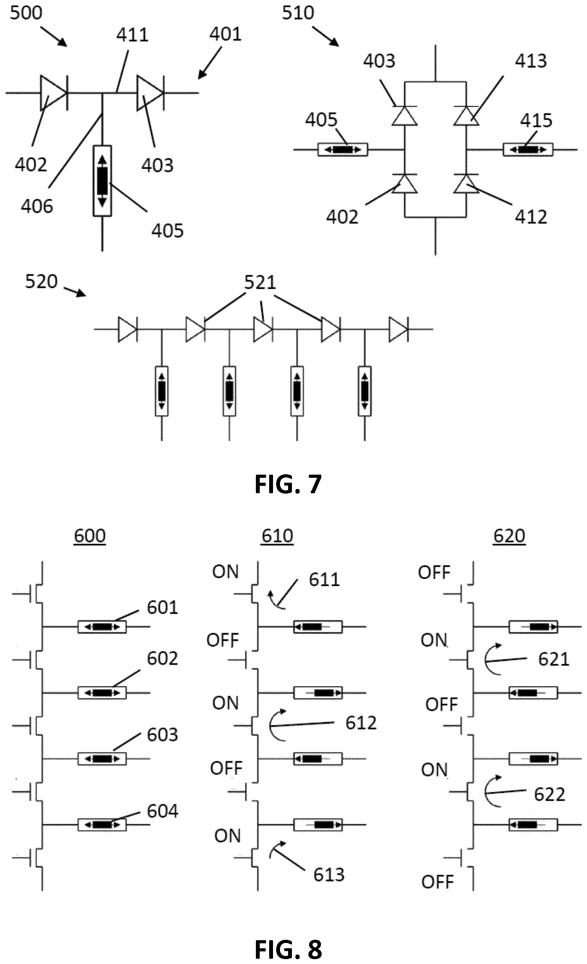

FIG. 7 shows three fluidic circuits providing fluid pumping. The upper left drawing 500 is equivalent to the simple pump shown in FIG. 6. An actuator 405, which can be seen as an alternate source, pumps fluid in a fluidic channel 401 from left to right, pulling fluid through the first diode 402 and pushing it through the second diode 402. The amount of fluid flowing backwards is reduced, or avoided, due to the (fluidic) diodes.

The upper right drawing 510 shows a fluidic analogy of an "electrical rectifier". In this configuration, parallel branches are operated out of phase by a couple of actuators 405, 415. This particular configuration provides a continuous or pulsed flow, much smoother than in the previous configuration 500, if both actuators are operated 180° out of phase, so the actuator 405 is pushing fluid upwards via the upper fluidic diode 403 of the actuator branch, while the opposite actuator 415 is pulling (or drawing) fluid through its lower fluidic diode 412 in one cycle, and in the following cycle, the actuator 405 is sucking fluid upwards via the upper fluidic diode 402 of the actuator branch, while the opposite actuator 415 is pushing fluid through its upper fluidic diode 413. The lower drawing 520 shows a plurality of modules, increasing the distance at which fluid can be provided by increasing locally the pressure along the microchannel. Intermediate fluid rectifiers such as (micro)fluidic diodes 521 may be optionally included, but are not essential.

Alternatively, the embodiment of a pump shown in FIG. 1 may comprise actuation and rectification, as already explained.

FIG. 8 shows an embodiment comprising fluidic valves and actuators. The valves are represented with the symbol of the transistor, instead of diode. These valves may be pumps as shown in FIG. 1, allowing unidirectional flow when active, and impeding backflow when inactive. For example, a valve may comprise the ring 305 of FIG. 1 and rectification means 304, 310, which may be connected to a microchannel, and actuation may be provided by an actuator 405 branching out of the microchannel. Additionally or alternatively, actuation may be provided in the ring itself with electrodes 305, as already discussed. Complex configurations are possible, for example the right drawing 600 where e.g. different pump stages synergize each other. An example of operation is shown in the central 610 and left drawing 620 of FIG. 8. In the central drawing, the odd (first and third) actuators 601, 603 push fluid, while the even (second and fourth) actuators 602, 604 suck fluid in the direction of the arrows 611, 612, 613. The fluidic valves allow the fluid movement (represented as an ON transistor) between a pushing actuator and a sucking actuator, but impede the flow in the opposite direction (represented as an OFF transistor). Then, the operation of the actuators shift in the opposite direction, as shown in the right drawing 620 of FIG. 8, and the odd actuators 601, 603 suck fluid, while the even actuators 602, 604 push fluid in the direction of the arrows 621, 622, and the fluidic valves shift from OFF to ON state and vice versa.

Valves can also be combined with other configurations, such as the rectifier configuration 510 of FIG. 7, using two parallel arms with actuators operating out of phase and valves instead of diodes.

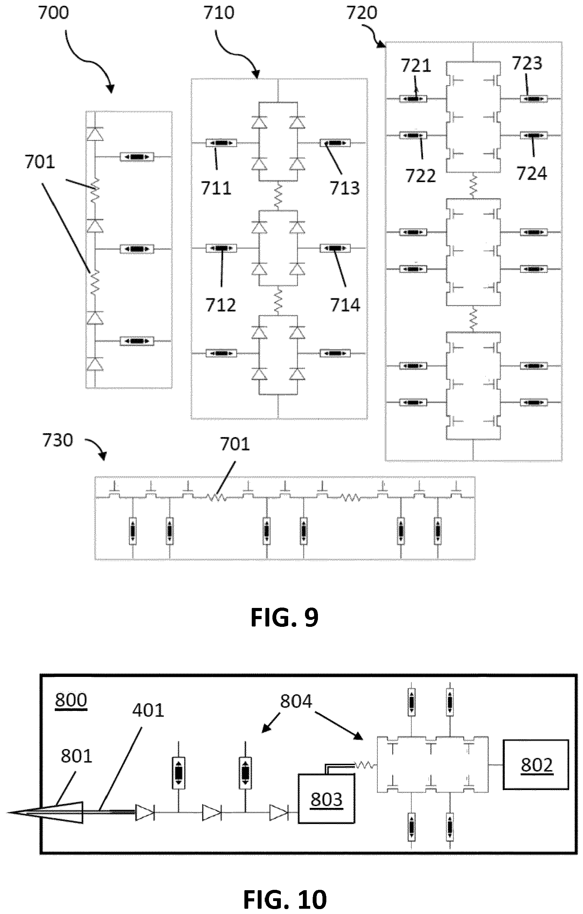

As an example of possible configurations and combinations thereof, various microfluidic circuits schemes 700, 710, 720, 730 are shown in FIG. 9, but the present invention is not limited thereto. As before, actuators may be adapted to operate with a phase shift. For instance, the actuators 711, 712 on the left branches of the central configuration 710 may operate 180° out of phase with respect to the actuators 713, 714 on the right of the configuration. Likewise, in the configuration 720 at the right, the consecutive actuators 721, 722 at the left branch of each parallel configuration may be out of phase between them, and be respectively out of phase between each of them and their corresponding actuator 723, 724 at the right branch of parallel configuration. Other fluidic configurations and functionalities may be provided by combination or permutation of fluidic circuit elements and operations.

In embodiments using actuation via energization of electrodes and capacitance, using air as the low-$\varepsilon$ fluid is advantageously easy to implement. Typically, air is provided in the "free connection" (analogous to "ground potential" in an electric circuit) opposite to the connection to the microfluidic channel where pumping action is required. In such embodiments, since air is highly compressible, including in series a plurality of actuators usually does not result in addition of pressures. In the configurations with a linear actuator, the "free connection" of the actuator is typically at atmospheric pressure. It is possible to put "repeater" pumps after a predetermined channel length, as shown in the left configuration 700 and bottom configuration 730. This additional portion, indicated by a resistor symbol 701 of FIG. 9, is included to compensate for the pressure drop over the channel and restore the driving pressure.

The microchannels, pumps and other elements of the microfluidic system may be provided in a material that is not completely opaque. This allows optical monitoring of the process. For example, they may be provided in a transparent or translucent substrate and covered by a transparent cap.

In a third aspect of the present invention, a method of fabrication of a system according to the first or second aspect is provided. A combination of several known techniques and industrial routes can be used for manufacturing such systems and structures. For example, two microfabricated wafers are bonded together with enclosed microchannels and electrowetting-controlled fluidic devices in between. The electrodes and electrical contacts are fabricated on the bottom wafer with fluidic input/output ports drilled through, for example a glass layer, or any other type of suitable material such as a composite, polymer, ceramic, a semiconductor wafer, a 6-inch-diameter silicon wafer, etc. Semiconductor wafers have the advantage that well known routes of processing are already industrially implemented. The 4-inch-diameter top wafer can be made of any suitable material, preferably transparent, for example Pyrex, which allows for optical observation of the liquids in the microchannels.

For the preparation of the bottom wafer, a 2-$\mu$m-thick layer of SiO2 is deposited by plasma-enhanced chemical vapor deposition (PECVD). Next, the electrode layer is formed by depositing and patterning a 300-nm-thick layer of aluminum. Any other suitable conductor, such as a metal (gold, platinum, copper, etc.) can be used. The electrode layer may comprise connections for an electrical source. A layer of SiO2 is then deposited and polished by chemical mechanical planarization (CMP) to a thickness of 2 $\mu$m. After CMP, the electrical-contact-pad openings are patterned and wet-etched in hydrofluoric acid. The microchannel layer is then formed by a 11-$\mu$m-thick patterned SU-8 photoresist. Next, a hydrophobic, amorphous fluoropolymer layer (aFP) film is spun on the wafer so that the aFP covers the top of the SU-8, including the channel side and bottom walls. The spun solution may comprise 3% aFP suspended in a perfluorinated solvent. After spinning, the wafer is baked at 90°C for 30 s to evaporate the remaining solvent, resulting in a 200-nm-thick film. This layer is further hardened by vacuum baking at 150°C for 1 min. In the final process step, an ultrasonic drill creates 2-mm-diameter fluidic ports through the wafer. A thick photoresist layer protects the aFP layer from damage during the drilling and is removed with acetone after drilling.

For the preparation of the top wafer, the microchannel layer is formed by a 11-$\mu$m-thick patterned SU-8 photoresist. Next, a transparent 100 nm layer of ITO is sputtered onto the wafer. This provides an electrode, and may be connectable to a source or to ground. Finally, 2% aFP is spun on the wafer and baked. The aFP application process is the same as that used for the bottom wafer, except in this case the film is only 80 nm thick. The actuator may comprise an width of around 100 microns, while the height (d) may be much smaller, for example 10 microns, or have two different sizes. The actuator may comprise two regions, one region A (with a distance d1 of 22 microns between the upper and lower wall) connected to the microfluidic channel and filled with aqueous solution, and another stout region B (with a distance d2 of 11 microns) mainly comprising oil or air, separated by a step or a slope. A high energization and pulling force of fluid from the tall region into the stout region is provided, thereby providing in the tall region a lower capacitance than that of the stout region.

The microfluidic layer may comprise also fluidic diodes, by providing shapes, cavities, neckings or other geometrical features, by known methods such as etching. These may have few microns, for example a single cavity 404 of FIG. 6 may be 200 micron long in a microfluidic channel of few microns of width (e.g. 20 microns). The microfluid layer may be comprised in the top or bottom wafer. If the fluid is conductive, no need of dielectric layer may be used, and the wetting would be controlled by controlling the charge of the fluid. If a dielectric layer is provided, it may advantageously be a hydrophobic layer, thus providing EWOD.

The final microfluidic structure is formed by thermally bonding the aFP surfaces of the two wafers. The bond is formed by applying pressure to the top of the Pyrex wafer at 150°C. After bonding, liquid connections are made with port assemblies, which are adhered (e.g. with glue such as epoxy) to the bottom of the silicon wafer. The ports can be a threaded component that allows for standard-size tubing to be conveniently connected. For example, 1-mm-diameter Teflon tubing can be used. Other tubings can be used, or no tubings, thus providing the liquid through open ports by pipetting, injection, etc.

In a fourth aspect, a diagnostic device is provided comprising fluidic channels. FIG. 10 shows an exemplary point-of-care diagnostics device 800. In order to spread the liquids from the inlet 801 towards any analyzing means 802 (e.g. sensors) and reactors 803 that may be present in the device, its fluidic channels 401 may include pumping systems 804, e.g. comprising valves, actuators and rectification means according to embodiments of the first and/or second aspect of the present invention.

**Claims**

1. A microfluidic pumping system for providing continuous or pulsed pumping action of a sample fluid along a microfluidic channel (301, 401) of a microfluidic device, the pumping system comprising:

- at least one actuator (405) comprising an actuator channel (305) and polarizing means (306), the polarizing means and surfaces of the actuator channel being adapted for generating pumping fluid motion by alternate variation of the wetting properties in the actuator channel, and
- at least one microfluidic rectification system (304, 310, 402, 403) for facilitating the flow of a sample fluid in a predetermined direction and reducing the flow in another direction,

the at least one microfluidic rectification system (304, 310,402,403) being laid out in or along the microfluidic channel, and the at least one actuator (405) being adapted for creating a pressure in the microfluidic channel (301, 401), the system thus being adapted for providing continuous or pulsed fluid movement of the sample fluid in a predetermined direction along the microfluidic channel (301, 401) when actuation of the pumping fluid in the actuator channel takes place and further not providing substantial sample fluid movement when no actuation takes place.

2. The pumping system of claim 1, wherein the actuator (405) branches out of the microfluidic channel (401), the branched-out actuator comprising polarizing means (306) adapted to increase wettability when active, the actuator further comprising surfaces adapted to decrease wettability when polarizing means (306) are inactive, thus adapted for providing a movement of fluid for creating a varying pressure in the microfluidic channel.

3. The pumping system according to any of claims 1 to 2, wherein the at least one actuator is a loop shaped actuator (305), part of the actuator channel having a common region with the microfluidic channel (301), the at least one actuator (305) being adapted for pumping the pumping liquid around the loop such that during said pumping, sample fluid (203) is flowing in between the pumping liquid (213) flow.

4. The pumping system of claim 3, wherein the rectification system comprises a shaped cross-point (310) of the microfluidic channel (301) and the actuator channel providing reducing the flow of a pumping fluid (213) in the microfluidic channel and of the sample fluid (203) in the actuator loop, and wherein the actuator comprises electrodes for generating fluid motion.

5. The pumping system of claims 1 to 2, wherein polarizing means are adapted for generating fluid motion by polarization across the interface between the pumping fluid and the sample fluid, wherein the pumping fluid and the sample fluid have different properties.

6. The pumping system of any of claims 1 to 2 wherein the actuator (405) is adapted to provide a back- and forth-movement of a predetermined volume, the actuator further being connected to the microfluidic channel (401) by a channel (406) **characterized by** a volume being equal to or larger than the predetermined volume of the back- and forth-movement induced by the actuator.

7. The pumping system of any of the previous claims wherein at least one microfluidic rectification system (402, 403) comprises at least one fluidic diode.

8. The pumping system of any of the previous claims wherein at least one microfluidic rectification system comprises at least one fluidic one-way valve.

9. The pumping system of any of the previous claims wherein the polarizing means (306) comprise two electrode layers in different walls of the actuator channel.

10. The pumping system of any of the previous claims wherein the surface of the actuator comprises at least one dielectric layer.

11. A microfluidic system comprising at least one fluidic channel (301, 401) and one or more fluidic pumping systems according to any of the previous claims.

12. The microfluidic system of claim 11 comprising a number N parallel pumping systems actuating with a 360°/N phase shift, for providing continuous or pulsed flow in a predetermined direction of a microfluidic system.

13. The microfluidic system of any of claims 11 to 12 further combining any or all of loop-shaped microfluidic channels (305) for providing fluid rectification and/or pumping, branched-out actuators (405) for providing pressure in the microfluidic channels, microfluidic diodes or one-way valves (402, 403) for fluid rectification, and portions (701) of the microfluidic channel with a length and/or section adapted for increasing locally the fluid pressure.

14. A diagnostic device (800) comprising at least one fluidic channel (401) and one or more fluidic pumping systems (804) according to any of claims 1 to 10 for pumping a sample fluid through the fluidic channel to an analyzing means (802) for analyzing the sample.

213    305

306

307

223    301

203    310

302    A    B    C    D    A    B    C    D    A
       i    ii   iii  iv   i    ii   iii  iv   i
       303    300

**FIG. 1**

303 b    303 c

**FIG. 2**

**FIG. 3a**

**FIG. 3b**

**FIG. 3c**

**FIG. 3d**

**FIG. 4**

Flow can pass:

Flow cannot pass:

**FIG. 5**

**FIG. 6**

**FIG. 7**

**FIG. 8**

FIG. 9

FIG. 10

**Europäisches Patentamt**
**European Patent Office**
**Office européen des brevets**

# EUROPEAN SEARCH REPORT

Application Number

EP 18 15 6738

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/000620 A1 (FOUILLET YVES [FR] ET AL) 7 January 2010 (2010-01-07) * paragraphs [0144] - [0189], [0234] - [0273]; figures 10A-B, 11A-B * | 1-3, 5-11,14 | INV. F04B43/06 F04B19/00 F04B17/00 |
| X | US 2011/150667 A1 (BERNSTEIN JONATHAN J [US]) 23 June 2011 (2011-06-23) * paragraphs [0028] - [0043], [0049] - [0052], [0058]; figures 1, 2A-B * | 1,2,4-6, 10-13 | ADD. F16K99/00 |
| A | EP 1 662 140 A2 (BROTHER IND LTD [JP]) 31 May 2006 (2006-05-31) * paragraphs [0093] - [0097]; claims 1-11; figure 25 * | 1-14 | |
| A | US 2011/083964 A1 (ULMANELLA UMBERTO [US]) 14 April 2011 (2011-04-14) * the whole document * | 1-14 | |

TECHNICAL FIELDS
SEARCHED      (IPC)

B01L
F04B
F16K

The present search report has been drawn up for all claims

| Place of search | Date of completion of the search | Examiner |
|---|---|---|
| The Hague | 14 May 2018 | Ruiz-Echarri Rueda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 6738

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2018

| Patent document cited in search report | | Publication date | Patent family member(s) | | Publication date |
|---|---|---|---|---|---|
| US 2010000620 | A1 | 07-01-2010 | EP 2143948 A2 | | 13-01-2010 |
| | | | FR 2933315 A1 | | 08-01-2010 |
| | | | US 2010000620 A1 | | 07-01-2010 |
| US 2011150667 | A1 | 23-06-2011 | NONE | | |
| EP 1662140 | A2 | 31-05-2006 | EP 1662140 A2 | | 31-05-2006 |
| | | | US 2006120879 A1 | | 08-06-2006 |
| US 2011083964 | A1 | 14-04-2011 | US 2011083964 A1 | | 14-04-2011 |
| | | | US 2012138158 A1 | | 07-06-2012 |
| | | | US 2014076436 A1 | | 20-03-2014 |
| | | | US 2015260311 A1 | | 17-09-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ABHARI et al.** *Int. J. Electrochem. Sci.,* 2012, vol. 7, 9765-9780
- **CHEN et al.** *J. Micromech. Microeng.,* 2008, vol. 18 (013001), 22
- **IVERSON et al.** *Microfluid Nanofluid,* 2008, vol. 5, 145-174
- **YONG CHAE JUNG ; BHARAT BHUSHAN.** Wetting Behavior of Water and Oil Droplets in Three-Phase Interfaces for Hydrophobicity/philicity and Oleophobicity/philicity. *Langmuir,* 2009, vol. 25 (24), 14165-14173
- **SINGHAL et al.** *Sensors and Actuators A,* 2004, vol. 113, 226-235
- **GAMBOA et al.** *Journal of Fluids Engineering,* 2005, vol. 127, 339-346